(19) Europäisches Patentamt
European Patent Office
Office européen des brevets

(11) Veröffentlichungsnummer: **0 354 178 A1**

(12) **EUROPÄISCHE PATENTANMELDUNG**

(21) Anmeldenummer: **89810552.3**

(22) Anmeldetag: **20.07.89**

(51) Int. Cl.5: **C 09 B 55/00**
C 08 K 5/00
//(C08K5/00,5:3412,5:3462)

(30) Priorität: **29.07.88 US 226358**

(43) Veröffentlichungstag der Anmeldung:
**07.02.90 Patentblatt 90/06**

(84) Benannte Vertragsstaaten:
**CH DE FR GB IT LI**

(71) Anmelder: **CIBA-GEIGY AG**
**Klybeckstrasse 141**
**CH-4002 Basel (CH)**

(72) Erfinder: **Lienhard, Paul, Dr.**
**Kirschgartenstrasse 14**
**CH-4402 Frenkendorf (CH)**

**Jaffe, Edward Ephraim, Dr.**
**3 Crenshaw Drive**
**Wilmington Delaware 19810 (US)**

(54) **Thermoplastische Kunststoffe enthaltend ein Metallkomplexpigment.**

(57) Thermoplastisches, in der Schmelze verarbeitbares hochmolekulares Material enthaltend mindestens einen Metallkomplex aus einem Liganden der Formel I
$D_1=CH=N-A-N=CH-D_2$ (I),
worin $D_1$ und $D_2$ unabhängig voneinander für einen Rest der Formeln (a), (b), (c) und (d)

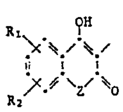
(a) ,
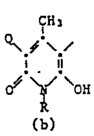
(b) ,
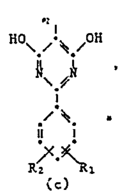
(c) ,
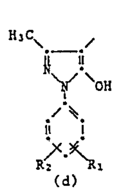
(d)

stehen, wobei Z O oder einen Rest der Formel $-NR_5$, und Q -CN oder $-CONH_2$ bedeuten, R -H, $C_1$-$C_4$-Alkyl oder den Rest

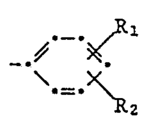

bedeutet,
$R_1$ und $R_2$ unabhängig voneinander -H, Halogen oder $-CH_3$ sind, $R_5$ -H oder $-C_1$-$C_4$-Alkyl ist, und A einen Rest der Formeln (e), (f) und (g)

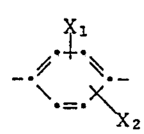
(e) ,
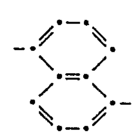
(f)
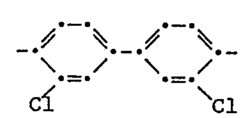
(g)

bedeutet,
worin $X_1$ und $X_2$ unabhängig voneinander -H, Halogen, $-CH_3$, $-OCH_3$ oder $-OC_2H_5$ sind, und das Metall Nickel, Kobalt oder Kupfer, oder Gemische davon bedeutet.

EP 0 354 178 A1

**Beschreibung**

**Thermoplastische Kunststoffe enthaltend ein Metallkomplexpigment**

Die Erfindung betrifft thermoplastische Kunststoffe enthaltend mindestens ein Bisazomethin-Metallkomplexpigment, sowie neue Metallkomplexe.

Metallkomplexe und ihre Verwendung als Farbmittel zum Färben von hochmolekularen organischen Materialien sind seit langer Zeit dem Fachmann bekannt. Eine Vielzahl verschiedenartiger Strukturtypen sind schon vorgeschlagen worden, wobei darunter die Azomethin-Metallkomplexe insbesondere dank guten allgemeinen Pigmenteigenschaften zu den bekanntesten Strukturtypen zählen. Beispiele hierfür sind z.B. in den US-Patenten Nr. 3677782 und Nr. 3700709 (Monoazomethin-Kupferkomplexe), Nr. 3864371 (Bisazomethin-Nickelkomplex) und Nr. 3875200 (Bisazomethin-Metallkomplexe enthaltend einen 2,3-Oxynaphthoesäurerest), im US-Patent Nr. 3963708 und im GB-Patent Nr. 1534787 (Bisazomethin-Metallkomplexe enthaltend Oxycumarinreste oder am Stickstoffatom substituierte Chinolinreste), im US-Patent Nr. 4008225 (Bisazomethin-Metallkomplexe mit verschiedenartigen Aldehydkomponenten) oder in der DE-Offenlegungsschrift Nr. 2008938 (Bisazomethin-Metallkomplexe enthaltend einen Dioxypyridinrest) beschrieben. Ein besonderes Merkmal der dort als bevorzugt angegebenen Metallkomplexe besteht darin, dass der Ligand mit dem Metallatom Chelat-Ringe bildet, wobei der mittlere, die Stickstoffatome enthaltende Ring ein ankondensiertes aromatisches o-Phenylenringsystem aufweist.

Auch das US-Patent Nr. 3132140 offenbart Bisazomethin-Nickelkomplexe, wobei sich die dort beschriebenen Verbindungen aus zwei Oxyaldehydresten und einem o- oder p-Phenylendiamin ableiten und als Pigmente zum Einfärben von Lacken vorgeschlagen werden.

Es ist ausserdem bekannt, dass die Verarbeitung von vielen Kunststoffen, insbesondere von Engineering Plastics, hohe Temperaturen erfordert und daher hohe Anforderungen an die Hitzebeständigkeit der dort eingesetzten Pigmente stellt. Solche Anforderungen werden nur von wenig organischen Pigmenten erfüllt [siehe z.B. "Industrielle organische Pigmente: Herstellung, Eigenschaft, Anwendung", Seite 104, Willy Herbst und Klaus Hunger, 1987, VCH Verlagsgesellschaft mbH, D-6940 Weinheim]. Auch die Azomethin-Metallkomplexe verhalten sich in derartigen Applikationen nicht optimal und weisen oft eine mangelnde oder knappe Hitzebeständigkeit auf.

Es ist nun gefunden worden, dass sich bestimmte Strukturtypen von Bisazomethin-Metallkomplexen enthaltend einen Liganden aus spezifischen Heteroarylaldehydresten und bestimmten Arylendiaminen durch hervorragende Pigmenteigenschaften, insbesondere durch eine gute Hitzebeständigkeit, in thermoplastischen Kunststoffen auszeichnen.

Die Erfindung betrifft demnach thermoplastisches, in der Schmelze verarbeitbares hochmolekulares Material enthaltend mindestens einen Metallkomplex aus einem Liganden der Formel I

$D_1\text{-}CH{=}N\text{-}A\text{-}N{=}CH\text{-}D_2$ (I),

worin $D_1$ und $D_2$ unabhängig voneinander für einen Rest der Formeln (a), (b), (c) und (d)

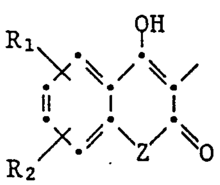
(a),

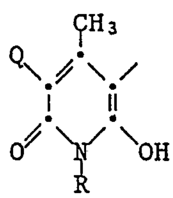
(b),

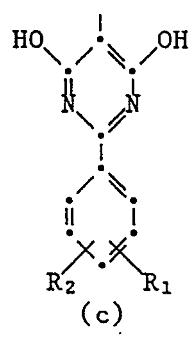
(c),

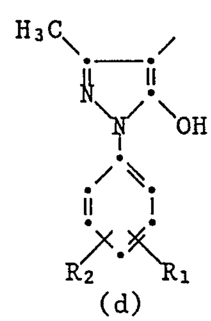
(d)

stehen, wobei Z O oder einen Rest der Formel $-NR_5$, und Q -CN oder $-CONH_2$ bedeuten, R -H, $C_1$-$C_4$-Alkyl oder den Rest

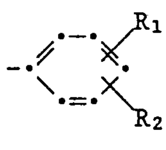

bedeutet,

$R_1$ und $R_2$ unabhängig voneinander -H, Halogen oder $-CH_3$ sind, $R_5$ -H oder $-C_1$-$C_4$-Alkyl ist, und A einen Rest der Formeln (e), (f) und (g)

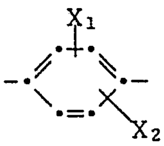 , 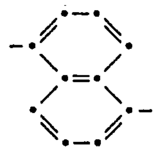 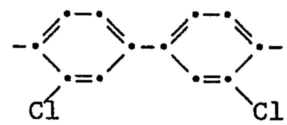

(e) (f) (g)

bedeutet,
worin $X_1$ und $X_2$ unabhängig voneinander -H, Halogen, $-CH_3$, $-OCH_3$ oder $-OC_2H_5$ sind, und das Metall Nickel, Kobalt oder Kupfer, oder Gemische davon bedeutet.

Die Metallkomplexe der Formel I enthalten ein Atom oder Ion Metall pro Ligandmolekül. Das Metall hat wahrscheinlich die Koordinationszahl 4 und die Oxidationszahl 2+. Zusammen mit dem doppelten Zweizahnliganden, der bei der Metallisierung zwei Protonen pro Molekül verliert, können sich neutrale Polymerkomplexe bilden. Unter den verschiedenen möglichen Strukturen sind derartige Ketten von deprotonierten, mit Metall(2+)-Ionen koordinierten Ligandmolekülen am wahrscheinlichsten.

Bevorzugt ist thermoplastisches, in der Schmelze verarbeitbares hochmolekulares Material enthaltend mindestens einen Metallkomplex aus einem Liganden der Formel II

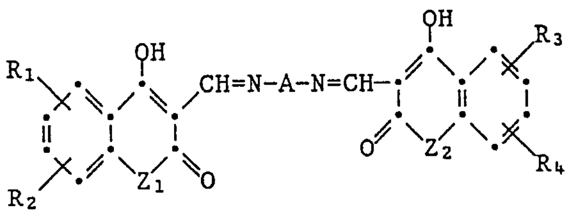 (II),

worin $Z_1$ und $Z_2$ unabhängig voneinander für O oder einen Rest der Formeln $-NR_5$ oder $-NR_6$ stehen, $R_1$, $R_2$, $R_3$ und $R_4$ unabhängig voneinander -H, Halogen oder $-CH_3$ bedeuten, $R_5$ und $R_6$ unabhängig voneinander -H oder $C_1$-$C_4$-Alkyl sind, A einen para-Phenylenrest obiger Formel (e) darstellt, wobei $X_1$ und $X_2$ unabhängig voneinander -H, Halogen, $-CH_3$, $-OCH_3$ oder $-OC_2H_5$ bedeuten, und das Metall Nickel, Kobalt oder Kupfer ist.

Bedeuten $R_1$, $R_2$, $R_3$, $R_4$, $X_1$ und $X_2$ Halogen, so handelt es sich um Chlor Brom, Jod oder Fluor, insbesondere aber um Chlor.

Bedeuten R, $R_5$ und $R_6$ $C_1$-$C_4$-Alkyl, so handelt es sich z.B. um $-CH_3$, $-C_2H_5$, $-n-C_3H_7$, $-iso-C_3H_7$ oder $-n-C_4H_9$.

$R_5$ und $R_6$ stehen bevorzugt für -H.

Von besonderem Interesse ist thermoplastisches Material enthaltend einen Nickelkomplex aus einem Liganden der Formel II, worin A ein para-Phenylenrest der Formel III

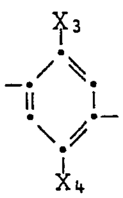 (III)

ist, wobei $X_3$ und $X_4$ unabhängig voneinander -H, -Cl, $-CH_3$ oder $-OCH_3$ bedeuten, $Z_1$ und $Z_2$ unabhängig voneinander O oder NH bedeuten, und $R_1$ bis $R_4$ die oben angegebene Bedeutung haben.

Ebenfalls von besonderem Interesse ist thermoplastisches Material enthaltend einen Nickelkomplex aus einem Liganden der Formel II, worin A ein para-Phenylenrest der Formel III ist, wobei $X_3$ und $X_4$ unabhängig voneinander -H oder -Cl bedeuten, $Z_1$ und $Z_2$ gleich sind, und $R_1$ und $R_3$ sowie $R_2$ und $R_4$ gleich sind.

Von ganz besonderem Interesse ist thermoplastisches Material enthaltend einen Nickelkomplex aus einem Liganden der Formel II, worin A para-Phenylen bedeutet, $Z_1$ und $Z_2$ O oder insbesondere NH und $R_1$, $R_2$, $R_3$ und $R_4$ -H sind.

Zu den erfindungsgemäss in Frage kommenden Metallkomplexen aus einem Liganden der Formel I gelangt man, wenn man z.B.:

a) je 1 Mol eines Formylderivates der Formeln IV und V (oder eines Arylimins des Formylderivates)
$D_1$-CHO (IV) $D_2$-CHO (V)
mit einem Mol eines Diamins der Formel VI
$H_2N$-A-$NH_2$ (VI)
in beliebiger Reihenfolge nach an und für sich bekannten Verfahren (wie z.B. in den US-Patenten Nr. 3132140 und Nr. 4008225 beschrieben) kondensiert und während oder nach der Kondensation mit einem Metallsalz umsetzt, oder

b) 2 Mol eines geeigneten Derivates der Formeln $D_1$ und $D_2$ mit einem Mol eines erfindungsgemäss in Frage kommenden Diamins gemäss obiger Definition in Gegenwart eines Formamidins oder eines Orthoameisensäuretrialkylesters der Formel $HC(OR')_3$ kondensiert, und den so gebildeten Liganden mit einem Metallsalz oder einer Metallkomplexverbindung zur Reaktion bringt, wobei in den Formeln IV, V und VI die Reste A, $D_1$ und $D_2$ die oben angegebene Bedeutung haben.

Beispiele für Orthoameisensäuretrialkylester sind Alkylester mit 1 bis 5 C-Atomen, insbesondere aber Orthoameisensäuretriethylester.

Die gemäss obigen Verfahren a) und b) verwendeten Ausgangsprodukte der Formeln IV, V und VI stellen bekannte Verbindungen dar. Die in Frage kommenden Arylaldiminderivate können z.B. nach dem im US-Patent Nr. 4008225 angegebenen Verfahren hergestellt werden.

Geeignete Metallsalze sind z.B. die entsprechenden Acetate, Chloride, Nitrate, Stearate und Phosphate.

Die nach obigen Verfahren a) und b) durchgeführten Kondensationen erfolgen zweckmässig in einem organischen inerten Lösungsmittel, z.B. in einem aliphatischen Alkohol mit 1 bis 4 C-Atomen, wie Methanol, Ethanol, Isopropanol und Butanol, ferner in Glykolen oder Glykolethern, offenkettigen oder cyclischen Aminen, wie Dimethylformamid, Dimethylacetamid oder N-Methylpyrrolidon, oder in Mischungen der vorgenannten Lösungsmittel sowie in Mischungen der genannten Lösungsmittel mit Wasser. Ein geringer Ueberschuss an Aldehyd, Aldimin- bzw. Orthoameisensäuretrialkylester kann vorteilhaft sein. Die Menge an Lösungsmittel ist an sich unkritisch und wird durch die Rührbarkeit bzw. Mischbarkeit des Reak tionsansatzes bestimmt. Die Umsetzung erfolgt in der Regel bei Temperaturen oberhalb von 60°C.

Als Beispiele für Ausgangsprodukte der Formeln IV und V sowie deren entsprechenden Arylaldiminderivate seien genannt:

2,4-Dihydroxy-3-formyl-chinolin, 2,4-Dihydroxy-6-chlor-3-formyl-chinolin, 2,4-Dihydroxy-6-methyl-3-formyl-chinolin, 2,4-Dihydroxy-7,8-dichlor-3-formyl-chinolin, 2,4-Dihydroxy-chinolin-3-N-phenylaldimin, 2,4-Dihydroxy-6-methyl-chinolin-3-N-phenylaldimin, 2,4-Dihydroxy-6-chlor-chinolin-3-N-phenylaldimin, 4-Hydroxy-3-formyl-2-oxo-1-methyl-chinolin, 4-Hydroxy-3-formyl-cumarin, 4-Hydroxy-6-methyl-3-formyl-cumarin, 3-Cyano-4-methyl-6-hydroxy-2-pyridon-5-N-phenylaldimin, 1-Ethyl- bzw. 1-Methyl-3-cyano-4-methyl-6-hydroxy-2-pyridon-5-N-phenylaldimin, 1-Ethyl-3-carbamoyl-4-methyl-6-hydroxy-2-pyridon-5-N-phenylaldimin, 1-n-Butyl-3-cyano-4-methyl-6-hydroxy-2-pyridon-5-N-phenylaldimin, Phenyl-3-cyano-4-methyl-6-hydroxy-2-pyridon-5-N-phenylaldimin, 2-Phenyl-4,6-dihydroxy-5-formyl-pyrimidin, 2-(4'-Chloro-phenyl)-4,6-dihydroxy-5-formyl-pyrimidin, 1-Phenyl-3-methyl-4-formyl-5-pyrazolon, 1-(4'-Methyl-phenyl)-3-methyl-4-formyl-5-pyrazolon, 1-(3'-oder 4'-Chlorophenyl)-3-methyl-4-formyl-5-pyrazolon.

Diese Ausgangsprodukte leiten sich von den entsprechenden, eine methylenaktive Gruppe enthaltenden Verbindungen ab, z.B. 4-Hydroxy-2-oxo-chinolin, 4-Hydroxy-2-oxo-N-methylchinolin, 6-Hydroxy-3-cyan-4-methylpyridon-2, 6-Hydroxy-3-cyan-4-methyl-N-methylpyridon-2, 2-Phenyl-4,6-dihydroxy-pyrimidin-1,3 und 3-Methyl-1-N-phenylpyrazolon-5.

Als Beispiele für Diamine der Formeln VI seien genannt:

1,4-Diaminobenzol, 1,4-Diamino-2-chlorbenzol, 1,4-Diamino-2-brombenzol, 1,4-Diamino-2,5-dichlorbenzol, 1,4-Diamino-2-methylbenzol, 1,4-Diamino-2,5-dimethylbenzol, 1,4-Diamino-2-methoxybenzol, 1,4-Diamino-2,5-dimethoxybenzol, 1,4-Diamino-2,5-diethoxybenzol, 2-Chlor-5-methyl-1,4-phenylendiamin, 2-Chlor-5-methoxy-1,4-phenylendiamin, 2-Methyl-5-methoxy-1,4-phenylendiamin, sowie 1,5-Naphthylendiamin und 3,3'-Dichlorbenzidin.

Ein weiterer Erfindungsgegenstand betrifft neue Metallkomplexe aus einem Liganden der obigen Formel I, worin $D_1$, $D_2$, A und das Metall die oben angegebene Bedeutung haben, wobei, wenn das Metall Nickel bedeutet und A für unsubstituiertes para-Phenylen steht, $D_1$ und $D_2$ nicht einen Rest der Formel (a) mit Z = NH und $R_1$ bis $R_4$ = H bedeuten dürfen.

Bevorzugt sind Metallkomplexe aus einem Liganden der obigen Formel II, worin $Z_1$, $Z_2$, $R_1$, $R_2$, $R_3$, $R_4$, $R_5$ und $R_6$ die dort angegebene Bedeutung haben.

In der Formel II bedeuten $R_5$ und $R_6$ bevorzugt -H.

Ebenfalls bevorzugt sind Nickelkomplexe aus einem Liganden der Formel II, worin $R_1$, $R_2$, $R_3$ und $R_4$ unabhängig voneinander -H, -Cl oder $-CH_3$ sind, und A ein para-Phenylenrest obiger Formel III ist, $Z_1$ und $Z_2$ O oder NH sind, worin $X_3$ und $X_4$ -H oder -Cl bedeuten, wobei, wenn $R_1$ bis $R_4$ -H sind, A nicht einen unsubstituierten para-Phenylenrest bedeuten darf.

Die nach den oben beschriebenen Methoden hergestellten Metallkomplexe der Formel I fallen zumeist schon in der Hitze aus und können durch Abfiltrieren und gegebenenfalls durch Waschen mit organischen Lösungsmitteln in reiner Form isoliert werden.

Sie stellen wertvolle Pigmente dar, welche im allgemeinen eine gute Textur besitzen und meistens als Rohprodukt verwendet werden können. Falls nötig oder erwünscht, kann man die Rohprodukte durch Mahlen oder Kneten in eine feindisperse Form überführen. Dabei werden zweckmässig Mahlhilfsmittel, wie Glas-, Kunststoff-, Stahl- oder Metallmahlkörper, anorganische und/oder organische Salze, in Gegenwart oder Abwesenheit organischer Lösungsmittel verwendet. Nach dem Mahlen werden Hilfsmittel wie üblich entfernt, lösliche anorganische Salze z.B. mit Wasser und wasserunlösliche Hilfsmittel beispielsweise durch Wasserdampfdestillation. Auch durch Behandeln der Rohpigmente mit organischen Lösungsmitteln kann oft eine Verbesserung der Pigmenteigenschaften erreicht werden.

Thermoplastische, in der Schmelze verarbeitbare hochmolekulare organische Materialien, die mit den Metallkomplexen aus einem Liganden der Formel I gefärbt bzw. pigmentiert werden können, sind z.B.

Polyolefine, wie Polyethylen, Polypropylen, Polybutylen und Polyisobutylen, ferner Styrolpolymerisate, wie Polystyrol oder Co- und Terpolymere des Styrols mit Acrylnitril (=SAN) oder mit Acrylnitril und Polybutadien (=ABS), Polycarbonate, Polyvinylchlorid, Polyester, wie Polyethylenglykolterephthalat, Polyamide, Fluorpolymerisate, wie Polytetrafluorethylen, Polymethacrylsäuremethylester, Polyurethane, Polyacetale, Polyether, Polyphenylenoxyde, Polyphenylensulfide, Polysulfone, Polyimide, Polyesterimide, sowie Mischpolymerisate solcher Stoffe, wie z.B. Polybutylenterephthalat und Polycarbonat.

Bevorzugte Polymere sind Polyethylen, Polypropylen, Polystyrol, Polyester, Polyamide, Polycarbonate und ABS, ganz bevorzugt aber Polyester, Polyamide und Polycarbonate, sowie Mischpolymerisate solcher Stoffe.

Je nach Verwendungszweck erweist es sich als vorteilhaft, die erfindungsgemäss in Frage kommenden Metallkomplexe als Toner oder in Form von Präparaten einzusetzen. Bezogen auf das zu pigmentierende hochmolekulare organische Material kann man sie z.B. in einer Menge von 0,01 bis 15 Gew.%, vorzugsweise 0,1 bis 5 Gew.%, einsetzen.

Die Pigmentierung der oben aufgeführten hochmolekularen organischen Substanzen mit den Metallkomplexen aus einem Liganden der Formel I erfolgt beispielsweise derart, dass man einen solchen Metallkomplex gegebenenfalls in Form von Masterbatches diesen Substraten unter Verwendung von Walzwerken, Misch- oder Mahlapparaten zumischt. Das pigmentierte Material wird hierauf nach an sich bekannten Verfahren, wie Kalandrieren, Pressen, Strangpressen, Giessen oder Spritzguss, in die gewünschte endgültige Form gebracht. Oft ist es erwünscht, zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung der anmeldungsgemässen Metallkomplexe in die Polymeren eingearbeitet werden. Es ist ferner möglich, zwecks Erzielung verschiedener Farbtöne den hochmolekularen, organischen Stoffen neben den anmeldungsgemässen Metallkomplexen noch Füllstoffe bzw. andere farbgebende Bestandteile, wie Weiss-, Bunt- oder Schwarzpigmente, in beliebigen Mengen zuzufügen.

Die anmeldungsgemässen Metallkomplexe der Formel I sind auch zum Einfärben von thermoplastischen Fasern, insbesondere Polypropylen-, Polycaprolactam- und Polyethylenterephthalat-Fasern, geeignet, und sie zeichnen sich durch gute Textilechtheiten, wie z.B. Nass- und Reibechtheit, aus. Sie können ferner die damit gefärbten Polymeren gegen die Einflüsse von Licht und Wetter stabilisieren.

Dank ihrer hervorragenden Hitzebeständigkeit und guten Dispergierbarkeit eignen sich die anmeldungsgemässen Metallkomplexe insbesondere zum Färben von modernen Engineering Plastics. Ausserdem zeichnen sich die erhaltenen Ausfärbungen durch gute allgemeine Eigenschaften, wie z.B. hohe Farbstärke, Transparenz und Farbtonreinheit (je nach Substrat und Pigmentpartikelgrösse), sowie gute Migrations-, Licht- und Wetterbeständigkeit, aus. Bei optimaler Partikelgrösse können die anmeldungsgemässen Metallkomplexe auch eine hohe Deckfähigkeit aufweisen.

Die erfindungsgemässen Metallkomplexe haben ferner die besondere Eigenschaft, das thermoplastische Material in einem grünstichig gelben Farbton einzufärben. Kombiniert man sie mit orangen, roten oder blauen Pigmenten, so erhält man eine besonders breite Palette von Farbtönen. Für den Anwender ergibt sich daraus der Vorteil einer grossen Einsatzbreite.

Die nachfolgenden Beispiele dienen zur Erläuterung der Erfindung.

Beispiel 1:

0,2 g des 1:1-Nickelkomplexes aus dem Liganden der Formel

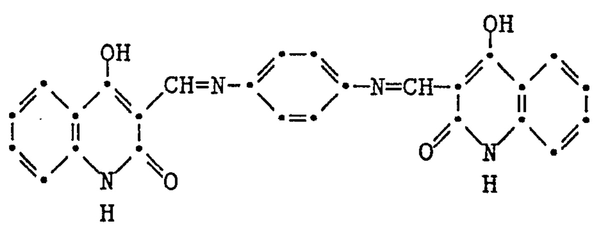

werden in gemahlener Form mit 67 g Polyvinylchlorid, 33 g Dioctylphthalat, 2 g Dibutylzinndilaurat und 5 g Titandioxid zusammengemischt und auf dem Walzenstuhl während 15 Minuten bei 160°C zu einer dünnen Folie verarbeitet. Die so erzeugte grünstichig gelbe PVC-Folie ist homogen gefärbt, farbstark, migrations- und lichtbeständig.

Beispiel 2:

0,2 g des 1:1-Nickelkomplexes aus dem Liganden der Formel

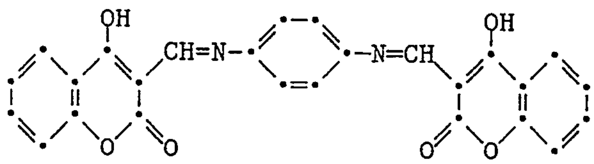

[durch Kondensation gemäss obiger Verfahrensvariante a) erhalten] werden, wie in Beispiel 1 beschrieben, in PVC eingearbeitet. Die erhaltene grünstichig gelb gefärbte Folie ist migrations- und lichtbeständig.

Beispiel 3:

Eine Mischung [bestehend aus 1 g des Nickelkomplexes von Beispiel 1, 1 g Antioxydans (®IRGANOX 1010, CIBA-GEIGY AG) and 1000 g Polyäthylen-HD Granulat (®VESTOLEN 60-16, HUELS)] wird während 15 Minuten in einer Glasflasche auf einer Rollbank vorgemischt. Danach wird die erhaltene Mischung in zwei Passagen auf einem Einwellenextruder extrudiert. Das so erhaltene Granulat wird auf der Spritzgussmaschine (Allround Aarburg 200) bei 220° C zu Plättchen verspritzt und während 5 Minuten bei 180° C nachgepresst. Die Plättchen weisen farbstarke grünstichig gelbe Nuancen mit ausgezeichneten Beständigkeiten auf.

Beispiel 4:

In einer 3 l-Glasflasche werden 1 g des in Beispiel 1 genannten Nickelkomplexpigmentes, 10 g Titandioxid (Qualität CL 220 der Firma KRONOS, Leverkusen, BRD) und 1000 g des Kunststoffs ABS (®TERLURAN 877 M der Firma BASF) während 15 Minuten gemischt. Die Mischung wird zweimal bei 190°C durch einen Kleinextruder (Typ 133 der Firma COLLIN, Ebersberg, BRD) gepresst und anschliessend jeweils granuliert. Dann wird das Material während 4 Stunden bei 90° C getrocknet.

Aus dem gefärbten Granulat werden bei 200° C in einem Spritzautomaten (Modell 200 der Firma AARBURG, Lossburg, BRD) Plättchen von ca. 3,5x4,5x0,2 cm gespritzt. Danach heizt man die Schmelzzone auf 260° C bzw. 280° C und spritzt nach jeweils 5 Minuten Verweilzeit weitere Plättchen der angegebenen Abmessungen. Die bei 200° C, 260° C bzw. 280° C hergestellten Plättchen weisen eine ähnliche grünstichig gelbe Nuance auf und zeichen sich durch eine gute Lichtbeständigkeit aus.

Beispiel 5:

Bei gleicher Arbeitsweise wie in Beispiel 4 erhält man mit 2,5 g eines 40%igen Präparates des in Beispiel 1 genannten Nickelkomplexpigmentes (Trägerharz: Polyäthylenwachs AC-617 der Firma Allied Chem.) grünstichig gelbe Plättchen mit guter Lichtbeständigkeit.

Beispiel 6:

Aus 2,5 g eines 40%igen Präparates (Trägerherz wie in Bsp. 5) des Nickelkomplexpigmentes von Beispiel 1 und 1 g des Perinon-Farbstoffes Solvent Red C.I. Nr. 135 erhält man bei gleicher Arbeitsweise wie in Beispiel 4 orange Plättchen.

Beispiel 7:

2 g eines 50%igen Präparates des in Beispiel 2 beschriebenen Nickelkomplexpigmentes (Trägerharz: Kolophoniumester, Marke Dertopoline G der Firma DRT, F-40103 Dax) werden, wie in Beispiel 3 beschrieben, in HD-PE-Plättchen eingearbeitet. Die Plättchen sind gelb gefärbt und weisen eine gute Lichtbeständigkeit auf.

Beispiel 8:

1 g des in Beispiel 2 beschriebenen Pigmentes, 10 g Titandioxid und 1000 g Polycarbonat (®Macrolon 2800 der Firma BASF) werden gründlich gemischt und bei 120° C vorgetrocknet. Die Mischung wird zweimal bei 260° C extrudiert und granuliert und anschliessend wieder bei 120° C getrocknet. Dann werden aus dem gefärbten Granulat bei 280° C, 300° C, 320° C und 340° C Plättchen gespritzt. Bei allen Temperaturen werden kräftig grünstichig gelbe, lichtbeständige Färbungen erhalten.

Beispiel 9:

1 g des in Beispiel 1 beschriebenen Nickelkomplexpigmentes, 10 g Titandioxid und 1000 g des Mischpolymers ®Xenoy CL 100 (Mischung aus Polybutylenterephthalat und Polycarbonat, Pulverqualität der Firma GENERAL ELECTRIC, Bergen NL) werden gut gemischt. Die Mischung wird zweimal bei 250° C extrudiert und granuliert, dann bei 120° C getrocknet. Das gefärbte Granulat wird bei 260° C, 280° C und 290° C, jeweils nach 5-minütigem Verweilen des Materials bei diesen Temperaturen, zu Plättchen verspritzt. Man erhält grünstichig gelbe, lichtbeständige Ausfärbungen.

Beispiele 10-14:

Ebenfalls wertvolle gelbe Kunststoff-Folien oder -Formteile erhält man bei analoger Arbeitsweise, wenn man ein Nickelkomplexpigment aus einem Liganden der folgenden Formel, worin $R_1$, $R_2$, $R_3$ und $R_4$ die in der folgenden Tabelle angegebene Bedeutung haben, einsetzt. Das Herstellungsverfahren des Metallkomplexes erfolgt gemäss obiger Verfahrensvariante a). Die Verbrennungsanalyse dieser Metallkomplexe bestätigt die 1:1 Nickelkomplex-Zusammensetzung; das heisst, dass pro Molekül Ligand ein Ni-Atom vorhanden ist.

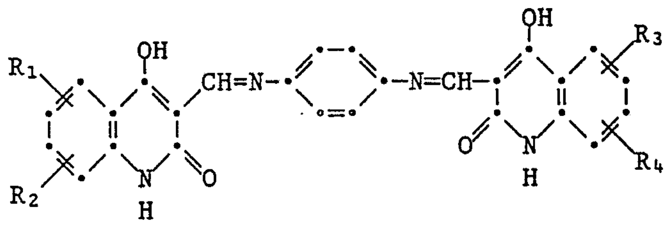

| Beispiel Nr. | $R_1$ | $R_3$ | $R_2$ | $R_4$ |
|---|---|---|---|---|
| 10 | $6-CH_3$ | $6-CH_3$ | H | H |
| 11 | 6-Cl | 6-Cl | H | H |
| 12 | 5-Cl | 5-Cl | 8-Cl | 8-Cl |
| 13 | 6-Cl | 6-Cl | 8-Cl | 8-Cl |
| 14 | 7-Cl | 7-Cl | 8-Cl | 8-Cl |

Beispiel 15:

1 g des Nickelkomplexes aus einem Liganden der Formel

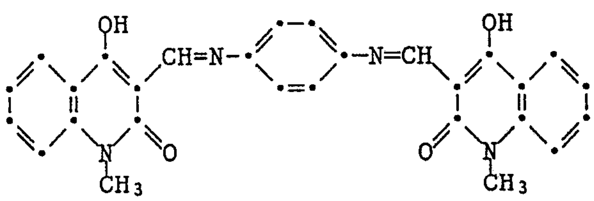

[gemäss obiger Verfahrensvariante a) erhalten] wird mit 1000 g HD-PE-Granulat gemäss Beispiel 3 verarbeitet. Farbstarke grünstichig gelbe Plättchen werden erhalten.

Beispiel 16:

2 g eines 50%-igen Präparates enthaltend den 1:1-Kobaltkomplex aus dem Liganden des Beispiels 2 und als Basisharz Kolophoniumester werden mit 1000 g HP-PE-Granulat gemäss Beispiel 3 verarbeitet. Gelbe Plättchen mit ausgezeichneter Lichtbeständigkeit werden erhalten.

Beispiel 17:

Analog dem Beispiel 9 werden grünstichig gelbe Plättchen mit guter Lichtbeständigkeit erhalten, wenn man 2,5 g eines 40%-igen Präparates enthaltend den im Beispiel 2 angegebenen Nickelkomplex und als Basisharz ein Polyethylenwachs (AC-617) verwendet.

Beispiel 18:

Analog dem Verfahren gemäss Beispiel 8 werden grünstichig gelbe Plättchen guter Licht- und Wetterbeständigkeit erhalten, wenn man 2,5 g eines 40%-igen Präparates enthaltend den Nickelkomplex des Beispiels 1 und als Basisharz Polyethylenwachs (AC-617) verwendet.

Beispiel 19:

3,3 g eines 30%-igen Präparates enthaltend das Nickelkomplexpigment gemäss Beispiel 1 und als Basisharz Polyethylenwachs AC-617 (von Allied Chem.), 10 g Titandioxid und 1000 g Polystyrol (®Polystyrol 165H der BASF) werden in einer 3-Liter-Glasflasche während 15 Minuten gemischt. Die Mischung wird zweimal bei 190°C durch einen Kleinextruder (Typ 133 der Firma Collin, Ebersberg, BRD) gepresst und anschliessend nach jeder Extrusion granuliert. Dann wird das Material während 4 Stunden bei 90°C getrocknet. Aus dem gefärbten Granulat werden bei 200°C in einem Spritzautomaten (Modell 200 der Firma Aarburg, Lossburg, BRD) Plättchen von ca. 3,5 x 4,5 x 0,2 cm gespritzt. Dann heizt man die Schmelzzone auf 220°C, 240°C, 260°C und 280°C und spritzt nach jeweils 5 Minuten Verweilzeit weitere Plättchen der angegebenen Abmessungen. Die bei diesen Temperaturen hergestellen Plättchen weisen eine grünstichig gelbe Nuance auf und zeichnen sich durch eine gute Lichtbeständigkeit aus.

Beispiel 20-27:

Ebenfalls wertvolle gelb gefärbte HD-PE-Plättchen werden erhalten, wenn man analog dem Beispiel 3 arbeitet und ein Metallkomplexpigment aus einem Liganden der folgenden Formel

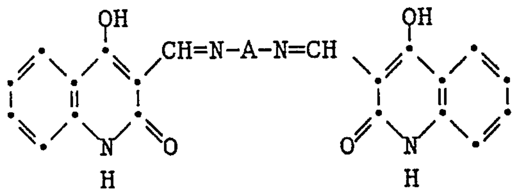

[nach obiger Verfahrensvariante a) hergestellt] verwendet, wobei A und das Metall die in der folgenden Tabelle angegebene Bedeutung haben

| Beispiel Nr. | 1:1 Metall-komplex | A |
|---|---|---|
| 20 | Ni | 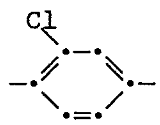 |
| 21 | Co | 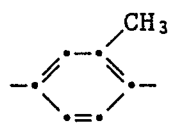 |
| 22 | Ni | 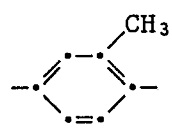 |
| 23 | Ni | 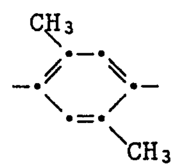 |
| 24 | Ni | 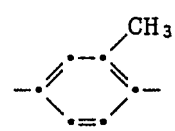 |
| 25 | Co | 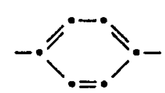 |
| 26 | Ni | 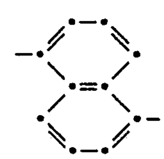 |
| 27 | Ni | 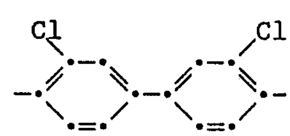 |

Beispiele 28-42:

0,2 g eines (in gemahlener Form) 1:1-Metallkomplexes aus einem Liganden der Formel

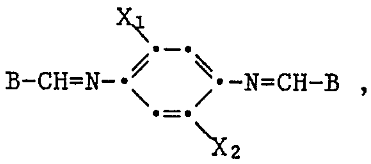

in welcher das Metall, $X_1$, $X_2$ und B die in nachstehender Tabelle angegebene Definition haben, werden in PVC gemäss Beispiel 1 eingearbeitet. Die so erhaltenen PVC-Folien sind gelb gefärbt. Diese Metallkomplexe werden nach der obigen Verfahrensvariante a) hergestellt.

| Beispiel Nr. | Metall | B | $X_1$ | $X_2$ |
|---|---|---|---|---|
| 28 | Co | 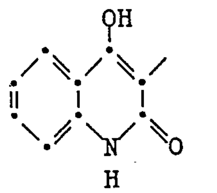 | H | H |
| 29 | Cu | 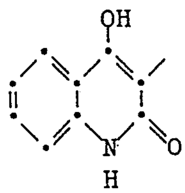 | H | H |
| 30 | Ni | 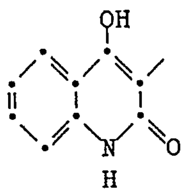 | $CH_3$ | H |
| 31 | Cu | 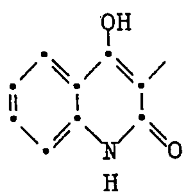 | $CH_3$ | H |
| 32 | Ni | 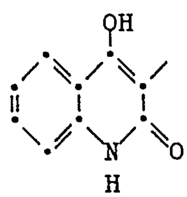 | $OCH_3$ | H |
| 33 | Cu | 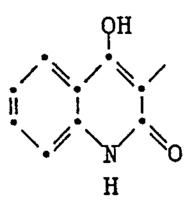 | $OCH_3$ | H |
| 34 | Co | 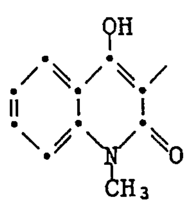 | H | H |

| Beispiel Nr. | Metall | B | $X_1$ | $X_2$ |
|---|---|---|---|---|
| 35 | Ni | 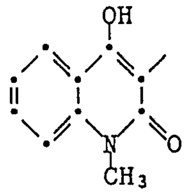 | H | H |
| 36 | Cu | 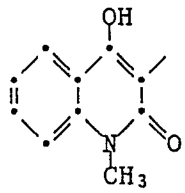 | H | H |
| 37 | Co | 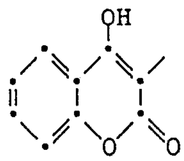 | H | H |
| 38 | Cu | 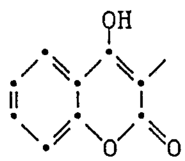 | H | H |
| 39 | Ni | 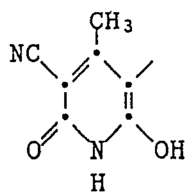 | H | H |
| 40 | Ni | 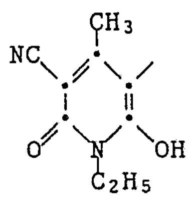 | H | H |
| 41 | Ni | 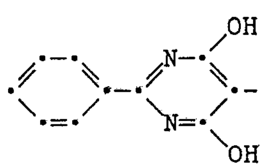 | H | H |
| 42 | Ni | 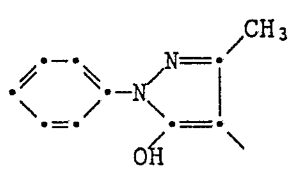 | H | H |

Beispiel 43:

2 g des nach Beispiel 1 herstellten Pigmentes, 50 g Titandioxid und 1000 g Polyamid 6 (®Ultramid B3K der Firma BASF) werden gut gemischt und 4 Std. bei 120° C vorgetrocknet. Die erhaltene Mischung wird zweimal bei 220° C extrudiert, dann granuliert und wiederum 4 Std. bei 120° C getrocknet. Das so hergestellte gefärbte Granulat wird bei 200° C, 260° C und 280° C, jeweils nach 5-minütigem Verweilen bei diesen Temperaturen zu Plättchen verspritzt. Man erhält farbstarke, grünstichig gelbe Ausfärbungen mit sehr guter Lichtbeständigkeit.

Beispiel 44:

1 g des nach Beispiel 1 herstellen Pigmentes, 1000 g des Kunststoffs Polyethylenterephthalat (PETP, ®Melinor B90 der Firma ICI) werden während 15 Minuten gemischt und während 4 Stunden bei 90° C vorgetrocknet. Die Mischung wird zweimal bei 270° C extrudiert, dann granuliert und wiederum bei 90° C während 4 Stunden getrocknet. Das so hergestellte, gefärbte Granulat wird bei 270° C, 280° C, 290° C und 300° C jeweils nach 5-minütigem Verweilen bei diesen Temperaturen zu Plättchen verspritzt. Man erhält grünstichig gelbe Ausfärbungen mit sehr guter Lichtbeständigkeit.

Beispiel 45:

Ein zur Faserherstellung geeignetes Polypropylengranulat wird mit 5 % eines Pigmentpräparates, enthaltend 20 % des Nickelkomplexes gemäss Beispiel 1, gründlich gemischt. Die Mischung wird auf einer Schmelzspinnanlage bei 260-285° C zu Fäden versponnen, die anschliessend auf einer Streckzwirnanlage im Verhältnis 1:4 verstreckt und aufgespult werden. Man erhält eine kräftige grünstichig gelbe Färbung, die sich durch gute Licht-, Wäsche-, Shampoo-, Reib- und Lösungsmittelechtheiten auszeichnet.

Bei sonst analoger Arbeitsweise erhält man ebenfalls sehr echte, gelbe Ausfärbungen, wenn man anstelle von Polypropylen Polycaprolactamgranulat verwendet, und die Mischung bei 260-290° C zu Färben verspinnt.

Das oben eingesetzte Präparat wird wie folgt hergestellt:

25 g des gelben Pigmentes, 47,5 g Polyethylen AC-617 (der Firma ALLIED Chemical USA) und 125 g Natriumchlorid werden in einem Pulvermischer gründlich gemischt. Diese Mischung wird mit einer Laborknetmaschine bei 80-100° C während 6 Stunden geknetet. Danach werden 52,5 g Polypropylen Pulver vom Typ ®Daplen PT 55 (der Firma CHEMIE Linz) zur Knetmasse gegeben und der Kneter auf 30° C gekühlt. Das erhaltene Präparat wird mit Wasser vermahlen, filtriert, salzfrei gewaschen, getrocknet und pulverisiert.

**Patentansprüche**

1. Thermoplastisches, in der Schmelze verarbeitbares hochmolekulares Material enthaltend mindestens einen Metallkomplex aus einem Liganden der Formel I

$D_1\text{-}CH{=}N\text{-}A\text{-}N{=}CH\text{-}D_2$ (I),

worin $D_1$ und $D_2$ unabhängig voneinander für einen Rest der Formeln (a), (b), (c) und (d)

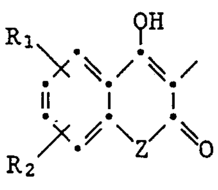
(a)
,
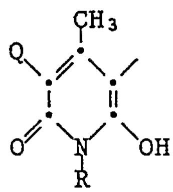
(b)
,
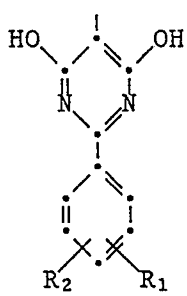
(c)
,
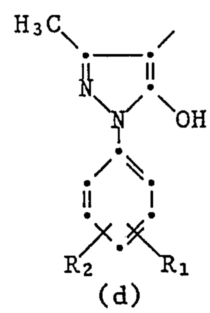
(d)

stehen, wobei Z O oder einen Rest der Formel $-NR_5$, und Q -CN oder $-CONH_2$ bedeuten, R -H, $C_1$-$C_4$-Alkyl oder den Rest

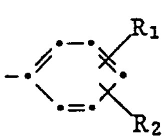

bedeutet,

$R_1$ und $R_2$ unabhängig voneinander -H, Halogen oder $-CH_3$ sind, $R_5$ -H oder $-C_1$-$C_4$-Alkyl ist, und A einen Rest der Formeln (e), (f) und (g)

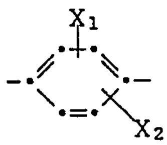 , 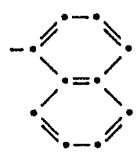 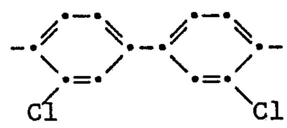

(e) (f) (g)

bedeutet
worin $X_1$ und $X_2$ unabhängig voneinander -H, Halogen, $-CH_3$, $-OCH_3$ oder $-OC_2H_5$ sind, und das Metall Nickel, Kobalt oder Kupfer, oder Gemische davon bedeutet.

2. Thermoplastisches Material gemäss Anspruch 1, worin der Ligand der Formel I die Formel II

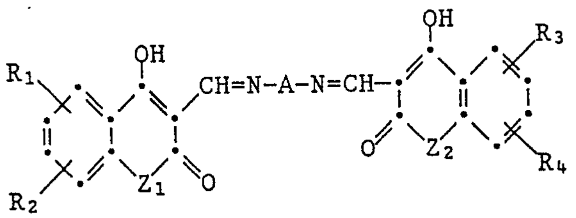

aufweist,
worin $Z_1$ und $Z_2$ unabhängig voneinander für O oder einen Rest der Formeln $-NR_5$ oder $-NR_6$ stehen, $R_1$, $R_2$, $R_3$ und $R_4$ unabhängig voneinander -H, Halogen oder $-CH_3$ bedeuten, $R_5$ und $R_6$ unabhängig voneinander -H oder $C_1$-$C_4$-Alkyl sind, A einen para-Phenylenrest der Formel (e)

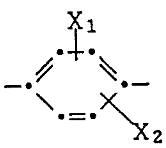 (e)

darstellt,
wobei $X_1$ und $X_2$ unabhängig voneinander -H, Halogen, $-CH_3$, $OCH_3$ oder $-OC_2H_5$ bedeuten, und das Metall Nickel, Kobalt oder Kupfer ist.

3. Thermoplastisches Material gemäss Anspruch 2, worin in der Formel II $R_5$ und $R_6$ -H bedeuten.

4. Thermoplastisches Material gemäss Anspruch 2, worin in der Formel II A ein para-Phenylenrest der Formel III

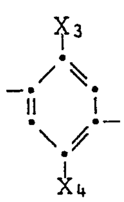 (III)

ist, wobei $X_3$ und $X_4$ unabhängig voneinander -H, -Cl, $-CH_3$ oder $-OCH_3$ bedeuten, $Z_1$ und $Z_2$ unabhängig voneinander O oder NH sind, $R_1$ bis $R_4$ die im Anspruch 2 angegebene Bedeutung haben und das Metall Nickel ist.

5. Thermoplastisches Material gemäss Anspruch 2, worin in der Formel II A ein para-Phenylenrest der Formel III ist, wobei $X_3$ und $X_4$ unabhängig voneinander -H oder -Cl bedeuten, $Z_1$ und $Z_2$ gleich sind, $R_1$ und $R_3$ sowie $R_2$ und $R_4$ gleiche Substituenten darstellen und das Metall Nickel bedeutet.

6. Thermoplastisches Material gemäss Anspruch 2, worin A in der Formel II para-Phenylen, $Z_1$ und $Z_2$ O oder NH und die Gruppen $R_1$, $R_2$, $R_3$ und $R_4$ -H sind, und das Metall Nickel bedeutet.

7. Thermoplastisches Material gemäss Anspruch 6, worin $Z_1$ und $Z_2$ NH sind.

8. Thermoplastisches Material gemäss Anspruch 1, dadurch gekennzeichnet, dass als in der Schmelze verarbeitbares hochmolekulares Material Polyolefine, Styrolpolymerisate, Polycarbonate, Polyvinylchlorid, Polyester, Polyamide, Fluorpolymerisate, Polymethacrylsäuremethylester, Polyurethane, Polyacetale, Polyether, Polyphenylenoxide, Polyphenylensulfide, Polysulfone, Polyesterimide, Polyimide, sowie Mischpolymerisate solcher Stoffe verwendet werden.

9. Thermoplastisches Material gemäss Anspruch 8, dadurch gekennzeichnet, dass Polyethylen, Polypropylen, Polystyrol, Polyester, Polyamide, Polycarbonate und ABS, sowie Mischpolymerisate solcher Stoffe, verwendet werden.

10. Metallkomplexe aus einem Liganden der Formel I

$D_1$-CH=N-A-N=CH-$D_2$ (I),

worin $D_1$, $D_2$, A und das Metall die im Anspruch 1 angegebene Bedeutung haben, wobei, wenn das Metall Nickel bedeutet und A für unsubstituiertes para-Phenylen steht, $D_1$ und $D_2$ nicht einen Rest der Formel (a) mit Z=NH und $R_1$, $R_2$, $R_3$ und $R_4$ =H bedeuten können.

11. Metallkomplexe gemäss Anspruch 10, wobei der Ligand die Formel II

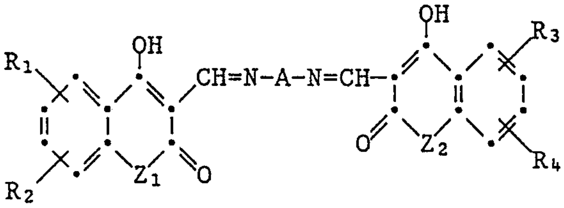

(II)

aufweist,

worin $Z_1$ und $Z_2$ unabhängig voneinander für O oder einen Rest der Formeln -$NR_5$ oder -$NR_6$ stehen, $R_1$, $R_2$, $R_3$ und $R_4$ unabhängig voneinander -H, Halogen oder -$CH_3$ bedeuten, $R_5$ und $R_6$ unabhängig voneinander -H oder $C_1$-$C_4$-Alkyl sind, A einen para-Phenylenrest der Formel (e)

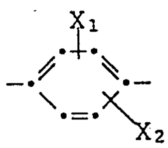

(e)

darstellt,

wobei $X_1$ und $X_2$ unabhängig voneinander -H, Halogen, -$CH_3$, -$OCH_3$ oder -$OC_2H_5$ bedeuten und das Metall Nickel, Kobalt oder Kupfer ist.

12. Metallkomplexe gemäss Anspruch 11, worin in der Formel II $Z_1$ und $Z_2$ O oder -NH sind.

13. Metallkomplexe gemäss Anspruch 11, worin in der Formel II $R_1$, $R_2$, $R_3$ und $R_4$ unabhängig voneinander -H, -Cl oder -$CH_3$ sind, und A ein para-Phenylenrest der Formel III

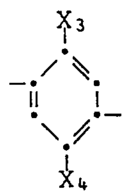

(III)

ist, worin $X_3$ und $X_4$ -H oder -Cl bedeuten, $Z_1$ und $Z_2$ unabhängig voneinander O oder NH sind, und das Metall Nickel ist, wobei, wenn $R_1$ bis $R_4$ -H sind, A nicht einen unsubstituierten para-Phenylenrest bedeuten darf.

Europäisches Patentamt

# EUROPÄISCHER RECHERCHENBERICHT

Nummer der Anmeldung

EP 89 81 0552

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | US-A-3 132 140 (E. JAFFE)<br>----- | | C 09 B 55/00<br>C 08 K 5/00 //<br>(C 08 K 5/00<br>C 08 K 5:341<br>C 08 K 5:346) |
| | | | **RECHERCHIERTE SACHGEBIETE (Int. Cl.5)** |
| | | | C 08 K<br>C 08 T<br>C 09 B |

Der vorliegende Recherchenbericht wurde für alle Patentansprüche erstellt

| Recherchenort | Abschlußdatum der Recherche | Prüfer |
|---|---|---|
| DEN HAAG | 02-11-1989 | STIENON P.M.E. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)